Europäisches Patentamt

European Patent Office

Office européen des brevets

(11) Publication number: **0 424 578 A1**

# EUROPEAN PATENT APPLICATION

(21) Application number: 89310874.6

(22) Date of filing: 23.10.89

(51) Int. Cl.⁵: **A23D 9/00**, A23J 1/20, A23K 1/00

(43) Date of publication of application:
02.05.91 Bulletin 91/18

(84) Designated Contracting States:
AT BE CH DE FR IT LI NL SE

(71) Applicant: UNILEVER NV
Burgemeester s'Jacobplein 1 P.O. Box 760
NL-3000 DK Rotterdam(NL)

(72) Inventor: Freeman, Christopher Paul
Meadow Bank Pavenham Road
Felmersham Bedford MK43 7EX(GB)
Inventor: Jarvis, Robert Michael
24 Spencer Court Station Road
Rushden Northants NN10 9TJ(GB)
Inventor: Wilding, Peter
113 Langham Road Raunds, Nr
Wellingborough Northants NN9 6LB(GB)

(74) Representative: Butler, David John et al
Unilever PLC Patents Division P.O. Box 68
Unilever House
London EC4P 4BQ(GB)

(54) Dry solid compositions containing lipid.

(57) A dry solid composition comprises from 70 to 95% by weight of lipid containing from 10 to 50% by weight free fatty acids, protected in sodium caseinate. The composition can be in free-flowing particulate form, and can be used as an ingredient in animal feedstuffs such as fish feeds. The composition can contain lipid-soluble components such as vitamins and carotenoid pigments.

EP 0 424 578 A1

# DRY SOLID COMPOSITIONS CONTAINING LIPID

The present invention relates to compositions containing lipid and which are in dry, solid form.

Many human foodstuffs and animal feedstuffs contain substantial levels of lipid. Due to its essentially oily or sticky nature, the presence of such lipid can give rise to processing problems. Indeed there are instances, such as in feedstuffs for fish, where for nutritional reasons it would be desirable to include higher lipid levels but this is rendered difficult or impossible due to the ensuing processing problems. It is an object of the present invention to provide a composition containing a very high lipid level which is nevertheless in dry, free-flowing particulate form and from which the lipid does not readily leak. Such a composition could be used as a feedstuff in its own right, but will more usually be blended with other feed ingredients to make a composite product.

Many techniques have previously been proposed for making "protected lipids". In particular, the use of proteins such as blood as an encapsulating or protecting medium for lipids has been widely investigated. The results of such investigations feature in many publications and patent specifications. For example, in GB patent specification no. 2156305, we describe a method for making an encapsulated lipid wherein an emulsion of an acidic lipid (containing more than 20% free fatty acids) and a protein suspension (e.g. blood) is allowed to form a firm gel, which is then dried to produce the protected lipid product. GB 2156305 gives examples of products containing lipid levels of up to about 60% by weight.

It is clearly desirable that the product should contain the highest possible proportion of lipid consistent with satisfactory physical protection of the lipid still being obtained. It would be expected that if the proportion of lipid in the composition is raised, and hence the proportion of protein or other protective agent is reduced, the extent to which the lipid is protected will diminish. Indeed, if the process described in GB 2156305 is applied to emulsions containing more than 70% by weight lipid, the proportion of protein in the emulsion is insufficient to enable a firm gel to form. The resulting liquid emulsion cannot be dried in equipment in which the composition being dried experiences a tumbling action, which is the preferred technique disclosed in GB 2156305.

The present invention provides a dry solid proteinaceous composition, preferably in free-flowing particulate form, containing from 70-95% by weight lipid, which lipid contains not less than 10% and not more than 50% by weight free fatty acids, protected in caseinate, preferably sodium caseinate. Preferably the composition contains at least about 80% lipid.

We have found that sodium caseinate can provide very effective physical protection even at these very high lipid inclusion levels, whereas other proteins, such as blood and soya protein isolate, are significantly less effective.

Unsaturated lipids, such as fish oils, tend to be easily degraded by oxidation. An additional and remarkable advantage of the invention is that the caseinate-protected product exhibits considerable stability in this respect. The reason why caseinate confers this benefit is not fully understood.

The free fatty acid level in the lipid is critical, because if the free fatty acid level is greater than about 50% by weight, it is impossible to provide an adequately protected lipid even with sodium caseinate. Similarly, if the free fatty acid level is below about 10% by weight of the lipid, significant leakage of the lipid from a caseinate-protected product can occur.

The invention also provides a process wherein a liquid emulsion of lipid, which lipid material contains from 10% to 50% by weight free fatty acids, in an aqueous solution containing not less than about 5% by weight of caseinate, is dried.

Preferably the free fatty acid content of the lipid is at least 20%, and more preferably at least 30%. We have found that an ideal level of free fatty acids in the lipid is about 40% by weight. Preferably the desired level of free fatty acids is achieved by blending different oils, such as neutral oil, e.g. whole fish body oil, with acid oil, e.g. distilled fish acid oil.

The liquid emulsion can be dried by a range of techniques, it is preferable to use fluid bed drying, spray drying or drum (film) drying.

In a particularly preferred embodiment of the invention, the lipid is fish oil. The fish oil can comprise a blend of commercially-available oils, such as whole fish body oil, fish acid oil and fish acid oil distillate. Other oils, such as soyabean oil and sunflower oil, can also be used.

A typical process according to the invention will involve homogenising the acidic lipid and an aqueous caseinate solution together, at a temperature of at least about 50°C to ensure that the lipid is fully liquid and the caseinate solution is not too viscous. The resulting emulsion is then dried.

Sodium caseinate is available commercially as a dry solid, and can be dissolved in water to provide the necessary solution. In general, the solution should contain from about 10% to about 20% by weight at caseinate. Alternatively, it is possible to use caseinate solution from a milk processing plant, thus avoiding the inherent cost of starting the process from a dried material to which water must be returned and then removed again. Preferably the pH of the solution should be at least about 6.5 but not greater than about 6.8.

Preferably, the lipid should be essentially free from traces of soaps or mineral acids (usually hydrochloric acids or sulphuric acid) which can interfere with the protective properties of the caseinate. Commercially-available oils, such as fish acid oil, are sometimes contaminated with such materials, and care should be taken as far a possible to ensure that the supply of lipid has a high degree of purity in this respect.

The invention has particular relevance to the manufacture of protected lipids for use in fish feeds.

An added advantage of the compositions of the invention is that they can be used as a vehicle for lipid-soluble ingredients, such as vitamins and carotenoid pigments such as astaxanthin, which are valuable components of feeds for creatures such as fish. Further aspects of the invention are feedstuff for fish comprising caseinate-protected lipid together with other nutrient materials, such as fish meal and cereals. Preferably such feedstuffs are in the form of extruded pellets, and it is an advantage of the invention that the caseinate-protected lipid can be blended with other feed ingredients and pelleted without the physical protection of the lipid seriously being affected by the processing conditions. The invention also includes the rearing of fish on a diet incorporating caseinate-protected lipid. The invention particularly provides a method of rearing salmonid fish, such as salmon or trout, on a diet incorporating caseinate-protected lipid containing a red-coloured carotenoid pigment, especially astaxanthin.

The following example illustrates the manufacture of a composition in accordance with the invention.

Example 1

2.4kg dried sodium caseinate was added slowly into 13.6 litres of water at 70°C, with constant stirring. The mixture was then vigorously agitated for a period of 2 minutes, using an industrial stirrer, to effect complete solution. A blend of fish oil fatty acid distillate (3.6kg), neutralised fish oil (5.4kg) and ethoxyquin antioxidant (9g) at 70-80°C was then added slowly, with constant stirring, to the caseinate solution also at 70-80°C. The mixture was then homogenised at the same temperature using a high-pressure ultrasonic homogeniser at a pressure of 14-16 bar. The homogenate was then dried using a fluid-bed drier, to give a free-flowing particulate composition which could be handled without leaving any oil residue.

Example 2

A protected lipid product according to the invention was prepared by the procedure in Example 1, containing 20% sodium caseinate and 80% of a 60:40 blend of neutralised marine oil, and fish oil fatty acid distillate containing 0.1% ethoxy quin anti-oxidant. The product was stored in bulk in a paper sack, and also as a number of small samples heat-sealed in plastic bags. The bags and sack were placed in cardboard boxes to keep out light and stored at ambient temperature over 12 months. Samples were regularly taken for analyses, and the composition of the lipid determined by GLC. The samples in plastic bags were analysed and discarded once opened. Fatty acids were methylated using a toluene, methanol, sulphuric acid reflux, and the fatty acid methyl esters were analysed on a wide bore capillary column. Using this method, the level of polyunsaturated fatty acids in the fish oil was monitored throughout the storage trial. Particular attention was given to the level of C20:5 and C22:6 acids. These polyunsaturated acids are very important constituents of fish oil, and any chemical degradation of these acids significantly lowers the nutritional value of the oil and leads to unpleasant rancidity characteristics.

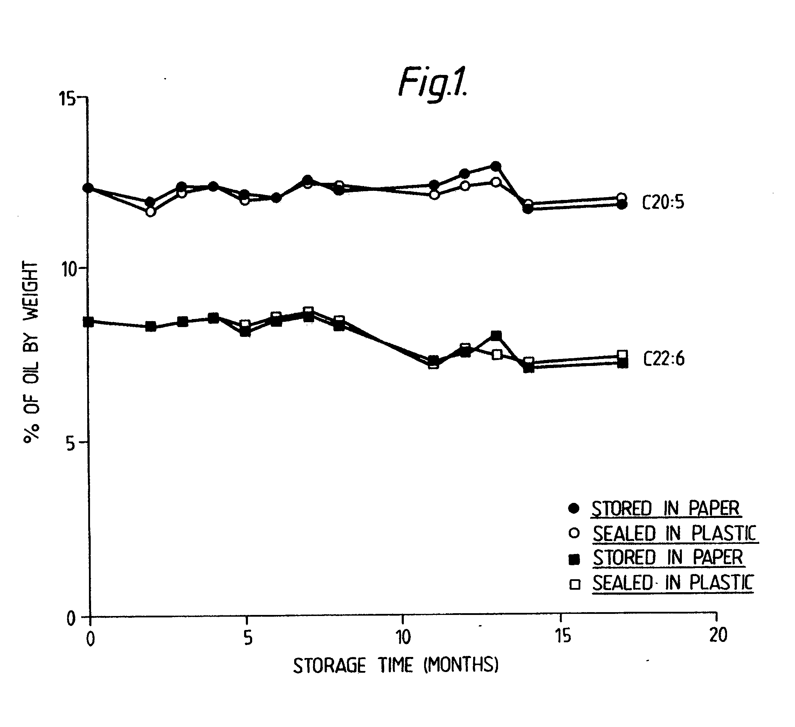

Throughout the period of the trial, the percentage level of both of these important polyunsaturated fatty acids remained essentially constant in the product. These results are shown graphically in the accompanying drawing (Figure 1). Under similar storage circumstances, commercial fish meal deteriorates rapidly and even after a period of only six months, it would usually be regarded as unusable. After six months, the percentage level of essential polyunsaturated fatty acids in commercial fish meal would have fallen dramatically.

**Claims**

1. A dry solid proteinaceous composition containing lipid, wherein the lipid comprises from 70 to 95% by weight of the composition, the lipid contains from 10 to 50% by weight free fatty acids, and the protein is caseinate.

2. A composition according to claim 1, wherein the lipid comprises at least about 80% by weight of the composition.

3. A composition according to claim 1 or claim 2, wherein the protein is sodium caseinate.

4. A composition according to any one of the preceding claims, wherein the lipid contains at least 20% by weight free fatty acids.

5. A composition according to claim 3, wherein the lipid contains at least 30% by weight free fatty acids.

6. A composition according to any one of the preceding claims, wherein the lipid contains about 40% by weight free fatty acids.

7. A composition according to any one of the preceding claims, wherein the lipid is fish oil.

8. A composition according to any one of claims 1 to 7, additionally incorporating one or more lipid-soluble feedstuff ingredients.

9. A composition according to claim 8, incorporating a vitamin.

10. A composition according to claim 8, incorporating a carotenoid pigment.

11. A composition according to claim 10, wherein the pigment is astaxanthin.

12. An animal feedstuff comprising a composition according to any one of claims 1 to 11, blended with other nutrient materials.

13. A feedstuff for fish comprising a composition according to any one of claims 1 to 11, blended with other nutrient material such as fish meal and cereals.

14. A feedstuff according to claim 12 or claim 13, in the form of extruded pellets.

15. A process for the preparation of a dry, free-flowing protected lipid composition, wherein a liquid emulsion of lipid, which lipid contains from 10 to 50% by weight free fatty acids, in an aqueous solution containing not less than about 5% by weight of caseinate, is dried.

16. A process according to claim 15, wherein the caseinate is sodium caseinate.

17. A process according to claim 15 or claim 16, wherein the lipid contains at least 20% by weight free fatty acids.

18. A process according to claim 17, wherein the lipid contains at least 30% by weight free fatty acids.

19. A process according to any one of claims 15 to 18, wherein the lipid contains about 40% by weight free fatty acids.

20. A process according to any one of claims 15 to 19, wherein the lipid is fish oil.

21. A process according to any one of claims 15 to 20, wherein the emulsion is dried by fluid bed drying or spray drying or drum drying.

22. A process according to any one of claims 15 to 21, wherein the acidic lipid and the caseinate solution are homogenised together at a temperature of at least about 50°C, and then dried.

23. A process according to any one of claims 15 to 22, wherein the aqueous solution contains from about 10% to about 20% by weight caseinate.

24. A process according to any one of claims 15 to 23, wherein the pH of the aqueous solution is at least about 6.5.

25. A process according to any one of claims 15 to 24, wherein the pH of the aqueous solution is not greater than about 6.8.

26. A composition according to any one of claims 1 to 14, in free-flowing particulate form.

27. Rearing of fish on a diet incorporating a composition according to any one of claims 1 to 11.

28. Rearing of salmonid fish, such as salmon or trout, on a diet incorporating a composition according to claim 10 or claim 11.

Fig1.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | GB-A-2 031 937 (BALFOUR MANUFACTURING CO.) <br> * Claims 1-4,6,8,9,17,23,24; page 2, lines 78-85 * | 1-3,12, 14-16, 21-26 | A 23 D 9/00 <br> A 23 J 1/20 <br> A 23 K 1/00 |
| X | WO-A-8 802 221 (KABIVITRUM AB) <br> * Claims 1,3,5,10,12; page 2, lines 1-17; page 3, lines 1-30 * | 1,7-9, 12,15, 20-22, 26 | |
| X | JOURNAL OF THE SCIENCE OF FOOD AND AGRICULTURE, vol. 31, no. 5, 1980, pages 439-447, Society of Chemical Industry, Barking, GB; J.L. CLAPPERTON: "The extent of hydrogenation of two formaldehyde-treated spray-dried mixtures of soya bean oil and casein fed to sheep" <br> * Page 439, abstract; page 440, last paragraph - page 441, first paragraph * | 1-3,15, 16,21, 26 | |
| D,A | GB-A-2 156 305 (UNILEVER PLC) <br> * Claims 1-4,7,8,10,11,13-19,21; page 1, lines 45-47; page 2, lines 17-20,36-38 * | 1,4-9, 12-15, 17-21, 26,27 | TECHNICAL FIELDS SEARCHED (Int. Cl.5) <br><br> A 23 D <br> A 23 J <br> A 23 K |
| A | GB-A-1 062 423 (NIPPON YUSHI K.K.). <br> * Claims 1,4,9; page 1, lines 40-45,84 - page 2, line 24; page 2, lines 69-70; example 2 * | 1,2,7, 15,20- 22,26 | |
| A | GB-A- 820 995 (UNILEVER) <br> * Claims 1,6,9,11,12; page 2, lines 25-30 * | 1,2,15, 21,26 | |

The present search report has been drawn up for all claims

| Place of search | Date of completion of the search | Examiner |
|---|---|---|
| THE HAGUE | 23-04-1990 | DEKEIREL M.J. |